# EUROPÄISCHE PATENTSCHRIFT

(11) **EP 2 497 396 B1**
(45) Veröffentlichungstag und Bekanntmachung des Hinweises auf die Patenterteilung: **20.02.2013**
(21) Anmeldenummer: 12158686.1
(22) Anmeldetag: 08.03.2012
(51) Int. Cl.: A47J 31/36, A47J 31/54

(54) **Kaffeemaschine und Verfahren zum Betrieb einer Kaffeemaschine**
Coffee machine and method for operating same
Machine à café et procédé destiné au fonctionnement d'une machine à café

(30) Priorität: 09.03.2011 DE 102011013422
(43) Veröffentlichungstag der Anmeldung: 12.09.2012
(73) Patentinhaber: Schultes, Bernhard, 63741 Aschaffenburg (DE)
(72) Erfinder: Schultes, Bernhard, 63741 Aschaffenburg (DE)
(74) Vertreter: Stiel, Jürgen

(56) Entgegenhaltungen:
- EP-B1- 1 986 530
- WO-A1-94/00045
- DE-A1- 2 747 990
- DE-T3- 69 122 012
- US-A- 4 137 833

## Beschreibung

Die Erfindung betrifft eine Kaffeemaschine und ein Verfahren zum Betrieb einer Kaffeemaschine gemäß den Merkmalen des Anspruches 1 und 15.

Derartige Kaffeemaschinen bilden beispielsweise Siebträger-Kaffeemaschinen, insbesondere Espresso-Kaffeemaschinen, die in unterschiedlichen Ausführungsformen im privaten und industriellen Bereich im Einsatz sind.

Aus der US 2006/0037481 A1 ist eine Espresso-Kaffeemaschine mit zwei Heizelementen und einer Pumpe bekannt.

Die DE 200 13 176 U1 offenbart eine Espresso-Kaffeemaschine mit einer Ausgabeeinrichtung mit einem zugeordneten Flüssigkeitskreislauf und Mitteln zum Erwärmen von Wasser. Dabei ist eine Pumpe vorgesehen, die den Flüssigkeitskreislauf unter Druck hält.

Die EP 1 986 530 B1 beschreibt eine Pad-Kaffeemaschine mit einem Wasserbehälter, einer Heizeinrichtung und einer Brühkammer, die durch eine Flüssigkeitsleitung miteinender verbunden sind. In einem Ausführungsbeispiel ist ein durch die Brühkammer führender Kreislauf mit einem Heizelement und einer Pumpe vorgesehen. In einem anderen Ausführungsbeispiel ist eine Dampfdüse angeordnet.

Die DE 691 22 012 T3 zeigt eine Kaffeemaschine mit einer Brüheinheit und zwei Dampfventilen. Der Brüheinheit sind eine Hochdruckpumpe und ein Heißwasservorrat mit einem Heizer vorgeordnet. Die Dampfventile sind mit einem Dampferzeuger verbunden. Durch die US 4 137 833 A ist eine Kaffeemaschine mit zwei Heizelementen, Brüheinrichtungen, einem Dampfauslass und einem Heißwasserauslass bekannt. Der Erfindung liegt die Aufgabe zugrunde, eine Kaffeemaschine und ein Verfahren zum Betrieb einer Kaffeemaschine zu schaffen.

Die Aufgabe wird erfindungsgemäß durch die Merkmale des Anspruches 1 oder 15 gelöst.

Die erfindungsgemäße Kaffeemaschine beinhaltet mindestens eine Brüheinrichtung, beispielsweise eine Brühgruppe, in der insbesondere ein Siebträger für Kaffee gelagert ist. Der Brüheinrichtung ist selektiv mindestens ein Kreislauf, insbesondere ein Heizkreis zur Zufuhr von Heißwasser zugeordnet. Das Heißwasser wird dabei mit einer Pumpe umgewälzt.

Durch die Umwälzung von Heißwasser in dem für die Brüheinrichtung vorgesehenen Heizkreis kann das Heißwasser, das beispielsweise dem Kaffee aufnehmenden Siebträger zugeführt wird, mit sehr kurzen Aufheizzeiten aufgeheizt werden.

Die Pumpe kann vorteilhaft integraler Bestandteil der Kaffeemaschine sein. Alternativ kann die Pumpe zusammen mit geeigneten Leitungen, die gegebenenfalls auch in Form von Schläuchen ausgebildet sind, eine modulare Einheit bilden, die an herkömmlichen Kaffeemaschinen nachgerüstet werden kann.

Vorteilhaft ist weiterhin, dass der Druck und die Temperatur des der Brüheinrichtung zugeführten Heißwassers durch eine Rechnersteuerung, die bevorzugt von einem Mikroprozessor übernommen wird, genau und individuell eingestellt werden kann, so dass für unterschiedliche Kaffeesorten dieser Druck und auch die Temperatur optimal vorgegeben werden können.

Im Heizkreis für die Brüheinrichtung sind die Pumpe und ein Heizelement vorgesehen, wobei gemäß einer besonders vorteilhaften Ausgestaltung der Erfindung insbesondere das Heizelement von einer Heizspirale gebildet ist.

Ein wesentlicher Vorteil des Einsatzes der Pumpe besteht darin, dass mit dieser durch das Umwälzen des im Heizelement zu beheizenden Wassers ein besserer, effektiverer Wärmeübertrag auf das Wasser erfolgt, wodurch eine erhebliche Verkürzung der Aufheizzeit der Brüheinrichtung erreicht wird.

Ein weiterer wesentlicher Vorteil besteht darin, dass die Pumpe zugleich auch als Mittel zur Drucksteuerung, das heißt zur Einstellung des Drucks des Heißwassers für die Brüheinrichtung, verwendet werden kann. Hierzu wird über die Rechnersteuerung die Drehzahl der Pumpe eingestellt, die ein direktes Maß für den Druck des Heißwassers bildet. Alternativ oder zusätzlich kann der Druck des Heißwassers durch ein von der Rechnersteuerung gesteuertes Drucksteuerventil, welches der Brüheinrichtung vorgeordnet ist, gesteuert werden.

Gemäß einer vorteilhaften Ausgestaltung der Erfindung weist der Heizkreis für die Brüheinrichtung als Zusatzheizung eine Heizpatrone auf, die an der Brüheinrichtung selbst angeordnet ist.

Die vorzugsweise ebenfalls von der Rechnersteuerung gesteuerte Heizpatrone stellt eine variabel abrufbare zusätzliche Heizleistung bereit, durch welche die Aufheizzeit für die Brüheinrichtung weiter reduziert werden kann. Da die Heizpatrone direkt in oder an der Brüheinrichtung angeordnet ist und in Wärmekontakt mit dieser ist, erfolgt ein besonders effektiver und schneller Wärmeübergang zur Brüheinrichtung, die vorzugsweise typisch einen Körper aus Messing oder allgemein aus einem gut wärmeleitenden Material aufweist, so dass diese sehr schnell und gleichmäßig aufgeheizt wird.

Besonders vorteilhaft bildet die Heizpatrone in einer Tieflochbohrung der Brüheinrichtung eine nachrüstbare Einheit.

Dadurch können auch bestehende Kaffeemaschinen mit geringem Aufwand mit einer derartigen Zusatzheizung ausgerüstet und/oder nachgerüstet werden.

Gemäß einer vorteilhaften Ausführungsform der Erfindung ist zusätzlich zu dem Kreislauf, insbesondere zu dem Heizkreis für die Brüheinrichtung zumindest in einem Betriebszustand und/oder außerhalb eines Reinigungsbetriebes eine hierzu separate, insbesondere rechnergesteuerte Heizleitung, insbesondere ein separater Heizkreis für ein anderes Heizelement, insbesondere für einen Heizkessel, das (der) zur Erzeugung von Heißwasser und/oder Dampf dient, vorgesehen.

Damit können die Brüheinrichtung und der Heizkessel je nach Bedarf unabhängig voneinander beheizt werden.

Besonders vorteilhaft ist, den Kreislauf des Brühelementes und/oder einen das andere Heizelement durchströmenden Kreislauf auch für einen, insbesondere automatisierten Reinigungsbetrieb zu verwenden. In diesem Reinigungsbetrieb zirkuliert in dem Kreislauf des Brühelementes und/oder in dem das andere Heizelement durchströmenden Kreislauf Reinigungsmittel, womit eine effektive Reinigung möglich ist.

Vorteilhaft ist weiterhin in einer Ausführungsvariante, dass für jeden Heizkreis ein separater, rechnergesteuerter Reinigungskreislauf vorgesehen ist.

Somit können die Brühgruppe und der Heizkessel auch je nach Bedarf unabhängig voneinander oder auch gemeinsam gereinigt werden. Besonders vorteilhaft wird zur Reinigung die Pumpe in einem reversiblen Betrieb betrieben, in welchem die Pumpe eine Reinigungslösung ansaugt und in einen der beiden Reinigungskreisläufe oder in einem gemeinsamen Reinigungskreislauf einspeist. Somit wird eine automatisch ablaufende Reinigung der Brühgruppe und des Heizkessels gewährleistet.

Besonders einfach ist es, in einem Reinigungsbetrieb und/oder in einem Aufheizbetrieb für das Brühelement und für das andere Heizelement, insbesondere für den Heizkessel einen gemeinsamen Kreislauf vorzusehen.

Gemäß einer besonders vorteilhaften Ausgestaltung der Erfindung weist der Heizkessel eine außenliegende Heizung auf, wobei insbesondere die außenliegende Heizung einen den Heizkessel umgebenden Mantel aus gut wärmeleitenden Material, insbesondere einen Aluminium-Mantel oder Kupfer-Mantel aufweist.

Vorteilhaft hierbei ist einerseits, dass mit der außenliegenden Heizung eine effiziente, schnelle und genau vorgebbare Beheizung des Heißwassers im Heizkessel ermöglicht wird.

Besonders vorteilhaft ist im Heizkessel ein erster Temperaturfühler und im Aluminium-Mantel oder Kupfer-Mantel ein zweiter Temperaturfühler angeordnet.

Damit muss die Wassertemperatur im Heizkessel nicht mehr indirekt über Druckmessungen bestimmt werden, sondern kann direkt über eine Temperaturmessung bestimmt werden. Durch die zusätzlich im Aluminium-Mantel oder Kupfer-Mantel erfolgende Temperaturmessung kann zudem die Temperatur des beheizenden Systems selbst gemessen werden, wodurch die dem Heißwasser zugeführte Wärme genau bestimmt werden kann. Dadurch wird ein durch die Rechnersteuerung genau vorgegebenes Aufheizprofil ermöglicht, wodurch nicht nur die Temperatur im Heizkessel genau vorgegeben werden kann, sondern insbesondere auch das Dampf/Wasserverhältnis im Heizkessel. Dies ist insbesondere bei der Zubereitung von Cappuccino ein wesentliches Qualitätsmerkmal, da dort ein möglichst trockener Dampf benötigt wird, das heißt ein großes Verhältnis von Dampf zu Wasser, was mit dem vorliegenden System ohne weiteres erreicht werden kann.

Gemäß einer vorteilhaften Ausgestaltung besteht der Heizkessel aus Edelstahl und/oder weist einen Ablauf zu dessen Entleerung auf.

Durch die Verwendung von Edelstahl besteht der Heizkessel aus lebensmittelechtem Material, wodurch eine gleichbleibend hohe Qualität des darin erzeugten Heißwassers gewährleistet ist. Generell kann der Heizkessel jedoch auch aus anderen Materialien bestehen.

Durch den dem Heizkessel zugeordneten Ablauf kann insbesondere zu Reinigungszwecken der Heizkessel entleert werden. Ein Ausbau des Heizkessels zu dessen Reinigung und Entkalkung, kann dadurch vermieden werden. Durch den Ablauf kann der Heizkessel vielmehr in einen von der Rechnersteuerung gesteuerten, automatisiert ablaufenden Reinigungsablauf eingebunden werden. In diesem Reinigungskreislauf kann zunächst über den Ablauf Restwasser aus dem Heizkessel abgelassen werden und dann Reinigungslösung in diesen eingeführt werden, welche nach einem Spülen des Heizkessels wieder über den Ablauf abgelassen wird.

Ein Vorteil hierbei ist, dass der Heizkessel mit dem Aluminium-Mantel oder Kupfer-Mantel eine außenliegende Heizung hat. Im Gegensatz zu einer im Heizkessel liegenden Heizung besteht somit keine Gefahr einer Verkalkung des Heizelements. Wird bei einem Reinigungskreislauf noch warmes Wasser aus dem Heizkessel abgelassen und nach erfolgter Reinigung durch frisches, kaltes Wasser ersetzt, so wird dies sofort etwas aufgeheizt, da am Aluminium-Mantel oder Kupfer-Mantel noch Wärme gespeichert ist, die auf das Wasser im Heizkessel übertragen wird. Damit wird die Aufheizzeit für das Wasser im Heizkessel verkürzt. Weiterhin ist vorteilhaft, dass die außenliegende Heizung von einem austauschbaren Heizelement gebildet ist, so dass dieses ohne Eingriff in den Heizkessel bei Bedarf ausgewechselt werden kann.

Ausführungsbeispiele der Erfindung sind in den Zeichnungen dargestellt und werden im Folgenden näher beschrieben.

Es zeigen:

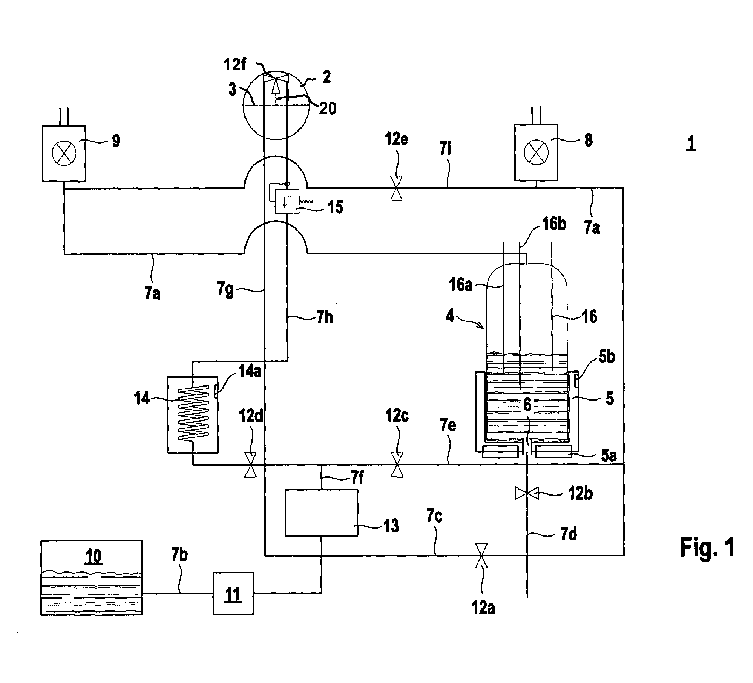

- Fig. 1: Schematische Darstellung eines Ausführungsbeispiels einer Kaffeemaschine;
- Fig. 2: eine schematische Darstellung einer Brühgruppe für die Kaffeemaschine;
- Fig. 3: eine schematische Darstellung eines ersten Heizkreises der Kaffeemaschine;
- Fig. 4: eine schematische Darstellung eines zweiten Heizkreises der Kaffeemaschine;
- Fig. 5: eine schematische Darstellung eines ersten Reinigungskreislaufes der Kaffeemaschine;
- Fig. 6: eine schematische Darstellung eines zweiten Reinigungskreislaufes der Kaffeemaschine;
- Fig. 7: eine Variante der Ausführungsform der Kaffeemaschine;
- Fig. 8: eine schematische Darstellung eines gemeinsamen Kreislaufes einer Ausführungsform der Kaffeemaschine;
- Fig. 9: eine schematische Darstellung einer Variante eines gemeinsamen Kreislaufes einer Ausführungsform der Kaffeemaschine.

Eine Kaffeemaschine 1, insbesondere eine Siebträger-Kaffeemaschine 1 weist mindestens eine Brüheinrichtung 2, beispielsweise eine Brühgruppe 2 auf, in die vorzugsweise ein Siebträger 3 mit Kaffee eingebracht wird, welcher durch Zufuhr von Heißwasser gebrüht wird.

Weiterhin umfasst die Kaffeemaschine 1 mindestens ein Heizelement 4, vorzugsweise einen Heizkessel 4, der zur Erzeugung von Dampf und/oder Heißwasser dient. Der Heizkessel 4 besteht insbesondere aus Edelstahl und damit aus lebensmittelechtem Material. Der Heizkessel 4 ist vorzugsweise an einer Außenseite gegen Wärmeverluste isoliert. Im Heizkessel 4 enthaltenes Wasser wird mittels einer außenliegenden Heizung auf mehr als 110°C, beispielsweise auf 130°C aufgeheizt.

Diese weist einen dicht an der Außenseite des Heizkessels 4 anliegenden Mantel 5, beispielsweise Aluminium-Mantel 5 oder Kupfer-Mantel 5 auf, der beheizbar ist. Zur Beheizung ist am Mantel 5 ein elektrisches Heizelement 5a austauschbar angeordnet. Da der Mantel 5 und der Heizkessel 4 aus gut wärmeleitenden Materialien bestehen, wird im Mantel 5 generierte Wärme schnell und verlustfrei auf das im Heizkessel 4 enthaltene Wasser bzw. den enthaltenen Dampf übertragen. Mit einem Temperatursensor 5b wird die Temperatur des Mantels 5 bestimmt. Damit wird vorzugsweise der Aufheizvorgang von Wasser im Heizkessel 4 gesteuert.

Der Heizkessel 4 weist vorzugsweise an seiner Unterseite einen Ablauf 6 auf, so dass der Heizkessel 4 zu Reinigungszwecken entleert werden kann, ohne dass hierzu der Heizkessel 4 aus der Kaffeemaschine 1 ausgebaut werden muss. Dieser Ablauf 6 des Heizkessels 4 ist mittels mindestens eines Ventils 12b betätigbar (zu öffnen und zu verschließen).

Mindestens ein Dampfanschluss 9 und/oder mindestens ein Heißwasseranschluss 8 ist/sind mittels mindestens einer Leitung zur Zuführung eines Fluides mit dem mindestens einem Heizelement 4, insbesondere mit dem Heizkessel 4 verbunden. Insbesondere ist zumindest der mindestens eine Dampfanschluss 9 vorgesehen. Vorzugsweise wird im Heizkessel 4 erzeugtes Heißwasser über mindestens eine Leitung 7a auf den mindestens einen Heißwasseranschluss 8 geführt und kann dort, beispielsweise zur Zubereitung von Tee, entnommen werden. Zudem kann mit dem Heißwasser auch ein nicht dargestellter Tassenwärmer versorgt werden. Der im Heizkessel 4 erzeugte Dampf wird mittels mindestens einer Leitung 7a auf den mindestens einen Dampfanschluss 9 geführt. Dort kann Dampf beispielsweise zur Aufschäumung von Milch und/oder zur Zubereitung von Cappuccino entnommen werden.

Der mindestens eine Dampfanschluss 9 und/oder der mindestens eine Heißwasseranschluss 8 weist jeweils ein Ventil zum Öffnen oder Schließen eines jeweiligen zugeordneten Auslasses auf.

Die Beheizung des Heizkessels 4 erfolgt vorzugsweise rechnergesteuert über einen nicht gesondert dargestellten Mikroprozessor. Die Steuerung der außenliegenden Heizung erfolgt dabei vorzugsweise in Abhängigkeit von Signalen von nicht dargestellten Temperaturfühlern, wobei ein erster Temperaturfühler im Heizkessel 4 zur Messung der Temperatur des dort enthaltenen Wassers angeordnet ist. Ein zweiter Temperaturfühler befindet sich beispielsweise im Mantel 5 zur Kontrolle der mit der außenliegenden Heizung generierten Wärme.

Die Zufuhr von Wasser zur Brüheinrichtung 2 oder dem mindestens einen Heizelement 4, vorzugsweise zum Heizkessel 4 erfolgt aus einem Wassertank 10. Vom Wassertank 10 führt eine Wasser führende Leitung 7b zu einer Pumpe 11. Diese Pumpe 11 führt das Wasser auf ein Leitungssystem mit weiteren Leitungen, 7c, 7d, 7e, 7f, 7g, 7h, 7i in welchen zur Steuerung des Wasserflusses Ventile 12a-12j vorgesehen sind. Die Pumpe 11 ist vorzugsweise als Druckpumpe ausgebildet und erzeugt zumindest teilweise in dem Leitungssystem einen beispielsweise konstanten Vordruck (z.B. 1,5 bar). In diesem Leitungssystem ist alternativ oder zusätzlich mindestens eine Pumpe 13 vorgesehen. Die Pumpe 13 kann als Umwälzpumpe und/oder Druckpumpe ausgebildet sein. Je nach Ausbildung der Pumpe 13 kann auf die Pumpe 11 verzichtet werden. Weiterhin ist zur Aufheizung des der Brüheinrichtung 2 zugeführten Wassers mindestens ein weiteres Heizelement 14, vorzugsweise in Form einer Heizspirale 14 vorgesehen. Die mindestens eine Brüheinrichtung 2 ist mittels mindestens einer Leitung zur Zuführung eines Fluides mit dem mindestens einen weiteren Heizelement 14 verbunden. Zumindest ein Teil des Leitungssystems bildet mindestens einen Kreislauf, der durch die mindestens eine Brüheinrichtung 2 geführt ist. Dazu sind vorzugsweise in dem Grundkörper 2a Öffnungen und/oder Leitungen vorgesehen. Die mindestens eine mit der mindestens einen Brüheinrichtung 2 verbundene Leitung zur Zuführung des Fluides und mindestens eine mit der mindestens einen Brüheinrichtung 2 verbundene Leitung zur Abführung des Fluides sind mit der mindestens einen Pumpe 13 und mit dem mindestens einen weiteren Heizelement 14 zumindest teilweise den mindestens einen, durch die mindestens eine Brüheinrichtung 2 geführten Kreislauf bildend verbunden.

In dem mindestens einen, durch die mindestens eine Brüheinrichtung 2 geführten Kreislauf ist die mindestens eine Pumpe 13 angeordnet. Der Heizspirale 14 ist vorzugsweise ein Temperatursensor 14a zugeordnet. Dessen Signale werden zur Temperatursteuerung beim Zubereiten von Kaffee verwendet. In der Wasser zur Brüheinrichtung 2 führenden Leitung 7h ist beispielsweise ein Drucksteuerventil 15 vorgesehen, welches der Brüheinrichtung 2 unmittelbar vorgeordnet ist. Schließlich ist in der Leitung 7i zwischen dem Heißwasseranschluss 8 und dem Dampfanschluss 9 ein Ventil 12e zur Trennung unterschiedlicher Leitungen, insbesondere Kreisläufe, beispielsweise Wasserkreisläufe vorgesehen.

Alternativ (beispielsweise zu der Verbindung mit dem Heizkessel 4) ist der mindestens eine Heißwasseranschluss 8 mittels mindestens einer Leitung mit dem mindestens einen, mit der Brüheinrichtung 2 verbundenen Heizelement 14 und/oder mit dem durch die Brüheinrichtung 2 geführten Kreislauf verbunden.

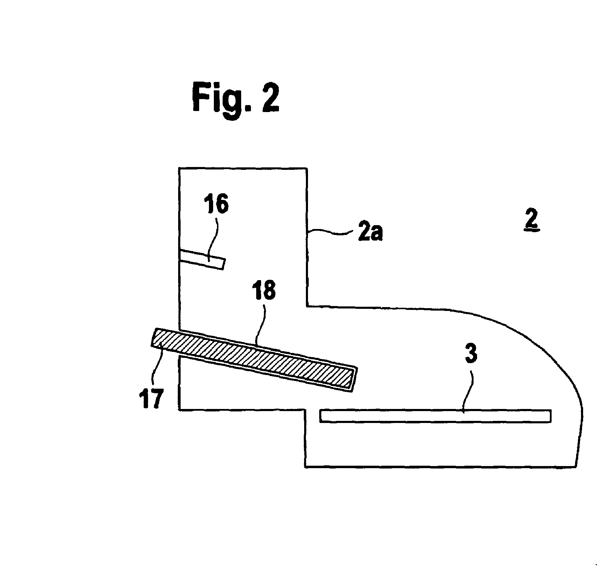

Die Brüheinrichtung 2 der Kaffeemaschine 1 weist einen Grundkörper 2a auf (Fig. 2), der vorzugsweise aus Messing besteht. Im Inneren des Grundkörpers 2a ist beispielsweise der Siebträger 3 mit einer Kaffeefüllung angeordnet, so dass dieser vorzugsweise über einen Auslass 20 mit Heißwasser aus der Leitung 7h zum Aufbrühen des Kaffees mit vorgegebenem Druck beaufschlagt wird. Dieser Auslass 20 ist mittels eines Ventils 12f absperrbar und/oder mit dem durch die Brüheinrichtung 2 geführten Kreislauf verbunden und/oder verbindbar. Im vorliegenden Ausführungsbeispiel ist das Ventil 12f als 3/2 Wegeventil ausgeführt, wobei bei einem Öffnen des Auslasses 20 der Kreislauf des Brühelementes 2 unterbrochen wird. Vorzugsweise wird dazu mittels des Ventils 12f, beispielsweise des 3/2 Wegeventils oder eines anderen, insbesondere weiteren Ventils die Leitung zur Abführung unterbrochen. Bei einem Brühvorgang wird vorzugsweise Wasser aus dem Wassertank 10 vorzugsweise mittels der Pumpe 11 und/oder der Pumpe 13 zu der Brüheinrichtung 2 nachgefördert und bei geöffneten Ventil 12f über den Auslass 20 dem Kaffee zugeführt..

Zur Kontrolle der Temperatur der Brüheinrichtung 2 ist im Grundkörper 2a ein Temperatursensor 16 gelagert, dessen Signale im Mikroprozessor ausgewertet werden. Typischerweise erfolgt die Steuerung in Abhängigkeit der Signale des Temperatursensors 16 derart, dass die Brüheinrichtung 2 auf eine Temperatur kleiner 100°C, insbesondere von maximal 95°C aufgeheizt wird und dort konstant gehalten wird, wobei die Aufheizung und auch das Halten der Temperatur sehr energieeffizient erfolgt. Die Temperatur kann mittels der Steuerung, insbesondere mittels des Mikroprozessors individuell eingestellt werden.

Weiterhin sind im Heizkessel 4 beispielsweise Sensorelemente 16a, 16b zur Bestimmung des Füllstands des Heizkessels 4 vorgesehen.

Für die Brüheinrichtung 2 ist vorzugsweise eine Zusatzheizung, beispielsweise eine Heizpatrone 17 vorgesehen. Die Heizpatrone 17 ist vorzugsweise in einer Tieflochbohrung 18 gelagert, die seitlich an dem Grundkörper 2a ausmündet. Die Heizpatrone 17 wird bevorzugt durch den Mikroprozessor gesteuert. Die Zusatzheizung in Form der Heizpatrone 17 bildet bevorzugt eine nachrüstbare Einheit. Zur Integration der Heizpatrone 17 braucht lediglich in dem Grundkörper 2a eine geeignete Tieflochbohrung 18 eingebracht werden.

Die verschiedenen Betriebsarten der Kaffeemaschine 1 werden im Folgenden erläutert.

Zumindest in einer Betriebsart ist der mindestens eine Kreislauf, vorzugsweise der Heizkreis der Brüheinrichtung 2 von mindestens einer Leitung, beispielsweise von einem Kreislauf zur Zuführung eines Fluides zu dem mindestens einen Dampfanschluss 9 und/oder zu dem mindestens einen Heißwasseranschluss 8 von dem mindestens einem Heizelement getrennt und/oder unabhängig. Vorzugsweise werden diese jeweils durch den Mikroprozessor gesteuert.

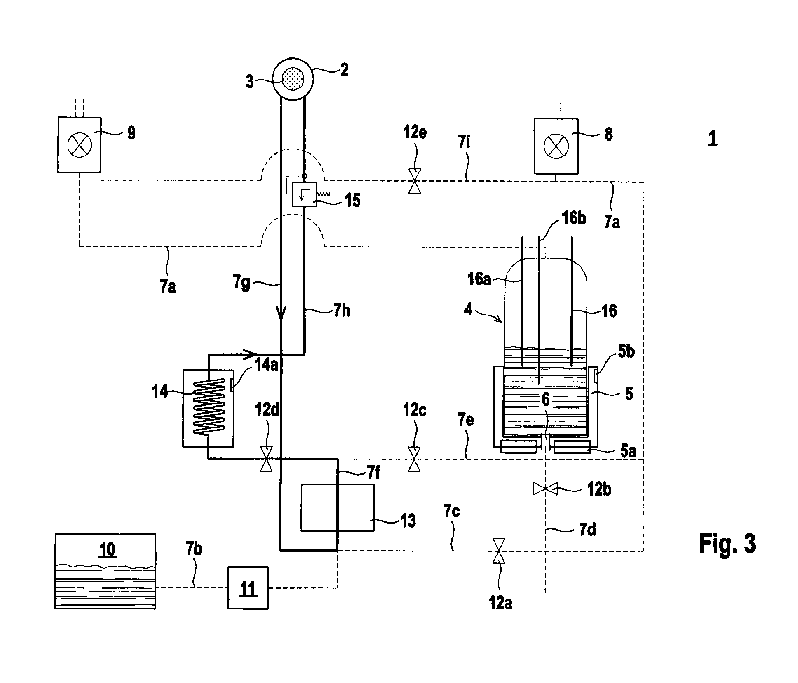

In einer Betriebsart erfolgt eine Aufheizung der Brüheinrichtung 2 (beispielsweise Fig. 3). Durch eine geeignete Beschaltung der Ventile 12a-12j wird ein Kreislauf, insbesondere Heizkreislauf des als Wassers vorliegenden Fluids zwischen der Pumpe 13, der Heizspirale 14 und der Brüheinrichtung 2 erhalten. Das Wasser wird bei diesem Kreislauf in den Leitungen 7f, 7g, 7h, welche die Brüheinrichtung 2, die Heizspirale 14 und die Pumpe 13 verbinden, geführt. Das der Brüheinrichtung 2 in der Leitung 7h zugeführte Wasser wird vor der Brüheinrichtung 2 in der Heizspirale 4 erhitzt. Das Heißwasser wird durch die Brüheinrichtung 2 geführt und aus der Brüheinrichtung 2 mittels der Leitung 7g zurück zur Pumpe 13 geleitet. Durch die Umwälzung des Wassers in der Pumpe 13 wird der Aufheizvorgang der Brüheinrichtung 2 erheblich beschleunigt.

Der Druck des Heißwassers in der Brüheinrichtung 2 wird individuell für unterschiedliche Kaffeesorten durch den Mikroprozessor vorgegeben. Zur genauen Vorgabe des Drucks dient einerseits das Drucksteuerventil, das vom Mikroprozessor gesteuert wird. Alternativ kann der Druck durch den Mikroprozessor dadurch vorgegeben werden, dass die Drehzahl der Pumpe 13 in geeigneter Weise gesteuert wird.

Bei Bedarf kann in diesem Heizkreis durch den Mikroprozessor die Zusatzheizung in Form der Heizpatrone 17 zugeschaltet werden, wodurch die Aufheizzeit der Brüheinrichtung 2 weiter verringert werden kann. Die Brüheinrichtung 2 weist generell eine große Oberfläche auf, so dass durch Wärmeabstrahlung große Wärmeverluste auftreten. Durch die Heizpatrone 17 kann die Brüheinrichtung 2 trotz dieser Wärmeverluste schnell und effizient aufgeheizt werden. Gemäß einer besonders energieeffizienten Ausgestaltung kann die Kaffeemaschine zunächst in einem Stand-by-Betrieb betrieben werden, um dann bei Bedarf zum Brühen von Kaffee mit der Heizpatrone 17 schnell die zusätzlich benötigte Heizleistung zur Verfügung zu stellen. Beispielsweise kann alternativ oder zusätzlich zu dem weiteren Heizelement 14 mittels dieser gesteuerten oder geregelten Heizpatrone 17 die Brüheinrichtung 2 in dem Stand-By-Betrieb auf eine vorzugsweise vorwählbare Temperatur gehalten werden.

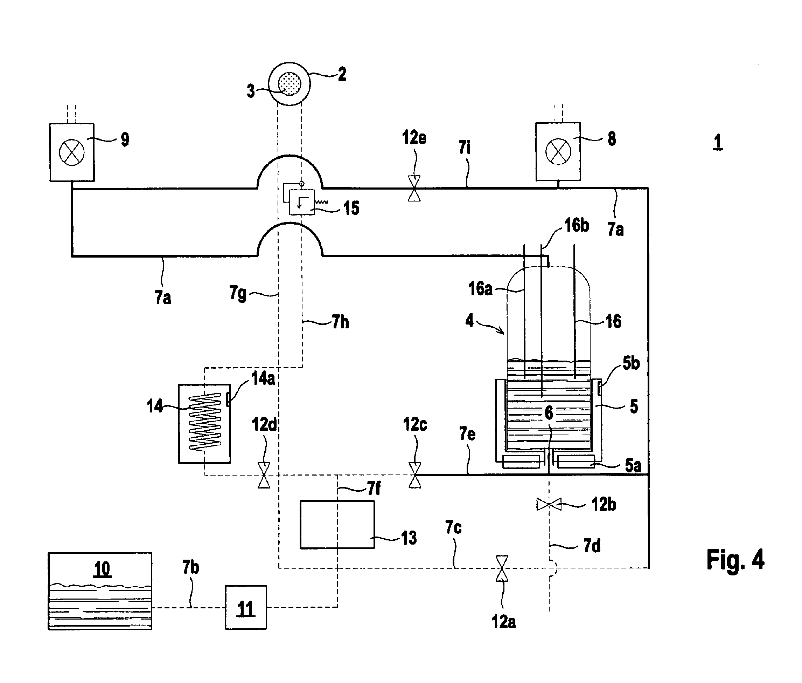

In einer Betriebsart erfolgt eine Aufheizung des Heizkessels 4 und/oder des mindestens einen Dampfanschlusses 9 und/oder des mindestens einen Heißwasseranschlusses 8 mittels des Heizkessels 4 mit einem Kreislauf (Fig. 4). Diese Betriebsart zur Aufheizung des Heizkessels 4 und/oder des mindestens einen Dampfanschlusses 9 und/oder des mindestens einen Heißwasseranschlusses 8 kann gleichzeitig oder zeitlich versetzt zur Betriebsart eine Aufheizung der Brüheinrichtung 2 und/oder einem Brühvorgang erfolgen. Dieser dem Heizkessel 4 und/oder dem mindestens einen Dampfanschluss 9 und/oder zu dem mindestens einen Heißwasseranschluss 8 zugeordnete Kreislauf ist beispielsweise vom Kreislauf der Brüheinrichtung 2 unabhängig.

Durch eine geeignete Steuerung der Ventile 12a-12j wird in diesem Kreislauf, vorzugsweise Heizkreis, Wasser in einen von den Leitungen 7a, 7e gebildeten Kreislauf geführt. Im Ausführungsbeispiel sind beispielsweise dabei das Ventil 12e geöffnet und die Ventile 12a, 12b, 12c geschlossen. Auch kann in diesem dem Heizkessel 4 und/oder dem mindestens einen Dampfanschluss 9 und/oder zu dem mindestens einen Heißwasseranschluss 8 zugeordnete Kreislauf die Pumpe 13 vorgesehen sein. Beispielsweise ist dazu zusätzlich ein Ventil 12h vorgesehen. Die Ventile 12b, 12d, 12h sind geschlossen und die Ventile 12a, 12c und 12e sind geöffnet.

Der mindestens eine Dampfanschluss 9 und/oder der mindestens eine Heißwasseranschluss 8 und/oder die mindestens eine mit dem mindestens einen Dampfanschluss 9 und/oder dem mindestens einen Heißwasseranschluss 8 verbundene Leitung zur Zuführung eines Fluides und die mindestens eine mit dem mindestens einen Dampfanschluss 9 und/oder dem mindestens einen Heißwasseranschluss 8 und/oder die mindestens eine mit dem mindestens einen Dampfanschluss 9 und/oder dem mindestens einen Heißwasseranschluss 8 verbundene Leitung zur Abführung eines Fluides sind mit der mindestens einen Pumpe 13 zumindest teilweise den mindestens einen, durch das mindestens eine Heizelement 4 führbaren und/oder geführten Kreislauf bildend verbunden und/oder verbindbar. Dabei ist die mindestens eine Leitung zur Abführung eines Fluides direkt mit dem mindestens einen Dampfanschluss 9 und/oder dem mindestens einen Heißwasseranschluss 8 verbunden. Alternativ können auch die mindestens eine Leitung zur Abführung eines Fluides und die mindestens eine Leitung zur Zuführung eines Fluides nahe, insbesondere unmittelbar und/oder direkt bei dem mindestens einen Dampfanschluss 9 und/oder dem mindestens einen Heißwasseranschluss 8 verbunden sein.

In einer Betriebsart erfolgt eine Erzeugung von Dampf und/oder Heißwasser mittels des Heizkessels 4 mit einem Leitungssystem. Hierbei ist beispielsweise der zur Aufheizung des Heizkessels 4 und/oder des mindestens einen Dampfanschlusses 9 und/oder des mindestens einen Heißwasseranschlusses 8 vorhandene Kreislauf unterbrochen. Diese Betriebsart zur Erzeugung von Dampf und/oder Heißwasser kann gleichzeitig oder zeitlich versetzt zur Betriebsart eine Aufheizung der Brüheinrichtung 2 und/oder bei einem Brühvorgang erfolgen.

In einer Ausführungsvariante ist nur der Dampfanschluss 9 mit dem Dampf erzeugenden Heizkessel 4 verbunden. Der ggf. vorhandene Heißwasseranschluss 8 ist mit dem der Brüheinrichtung 2 zugeordneten Heizelement 14 verbunden und erhält von diesem Heizelement 14 Heißwasser.

Durch eine geeignete Steuerung der Ventile 12a-12j wird Heißwasser in einem Leitungsabschnitt in der Leitung 7a und in der Leitung 7e von dem Heizkessel 4 zu dem Heißwasseranschluss 8 geführt. Gleichzeitig oder zeitlich versetzt wird in einem anderen Leitungsabschnitt in der Leitung 7a Dampf von dem Heizkessel 4 zu dem Dampfanschluss 9 geführt. Vorzugsweise ist der eine dem Heißwasseranschluss 8 zugeordnete Leitungsabschnitt der Leitung 7a von dem anderen dem Dampfanschluss 9 zugeordneten Leitungsabschnitt der Leitung 7a mittels des Ventils 12e getrennt. Im Heizkessel 4 enthaltenes Wasser wird mit der außenliegenden Heizung im Mantel 5 beheizt. Die Beheizung erfolgt gesteuert durch den Mikroprozessor in Abhängigkeit der Signale der Temperaturfühler im Heizkessel 4 beziehungsweise im Mantel 5. Dadurch wird durch den Mikroprozessor der Aufheizvorgang derart gesteuert, dass das Verhältnis von erzeugtem Heißwasser zu erzeugtem Dampf im Heizkessel 4 genau vorgegeben wird. Der erzeugte Dampf wird am Dampfanschluss 9 bereitgestellt, das erzeugte Heißwasser wird am Heißwasseranschluss 8 bereitgestellt.

In einem Reinigungsbetrieb ist zumindest teilweise in dem Leitungssystem Reinigungsmittel angeordnet. Dieses Reinigungsmittel weist insbesondere zumindest Kalkentferner und/oder Schmutzentferner auf.

Entsprechend den beiden separaten Heizkreisen für die Brüheinrichtung 2 und für den Heizkessel 4 sind für diese Einheiten beispielsweise auch separate Reinigungskreisläufe vorgesehen, welche ebenfalls durch den Mikroprozessor gesteuert werden. Die Reinigungskreisläufe laufen automatisiert ab, wobei keinerlei oder nur minimale Aus- oder Umbauten in der Kaffeemaschine 1 zur Durchführung der Reinigungsvorgänge notwendig sind. Eine Rechnersteuerung, insbesondere der Mikroprozessor ist zumindest mindestens ein Ventil 12a-12h bei einer Umschaltung von einem Betriebszustand (Beispielsweise Aufheizvorgang und/oder Brühvorgang und/oder Erzeugung von Dampf und/oder Heißwasser) in einen Reinigungszustand steuernd angeordnet.

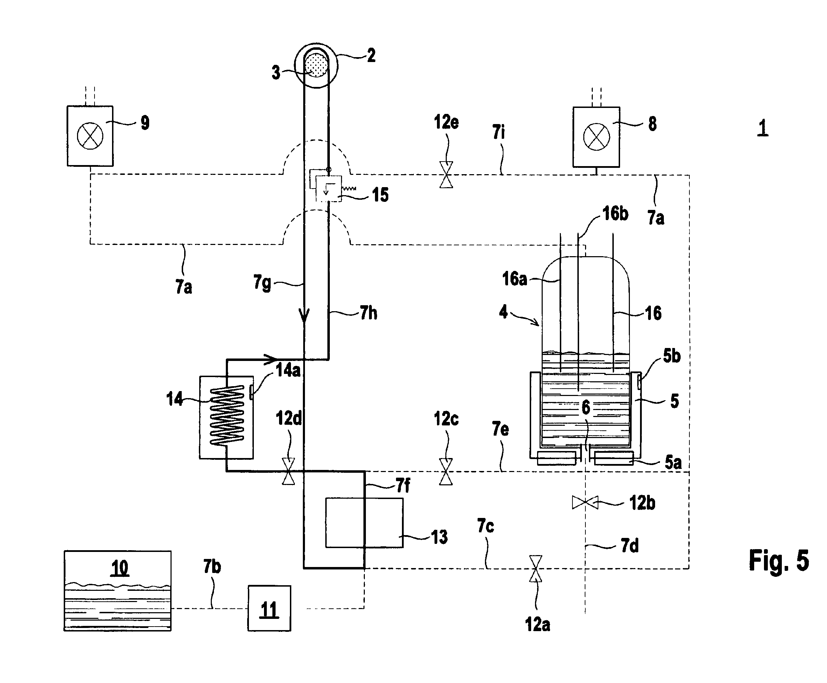

In einem Reinigungsbetrieb, insbesondere Reinigungskreislauf zur Reinigung der Brühgruppe 2 und/oder des Heizelementes 14, insbesondere der zugeordneten Heizspirale 14 (beispielsweise Fig. 5) zirkuliert Reinigungsmittel, insbesondere Reinigungslösung in dem mindestens einen, durch die mindestens eine Brüheinrichtung 2 geführten Kreislauf.

Bei beiden Reinigungskreisläufen wird durch die Steuerung des Mikroprozessors die Pumpe 13 (beispielsweise reversierend, das heißt in einem Rückwärtslauf) betrieben, so dass aus dem Wassertank 10 Wasser mit einer zuvor zugegebenen Reinigungslösung aus dem Wassertank 10 mittels der Pumpe 13 angesaugt und in den jeweiligen Kreislauf zur Reinigung eingespeist wird.

In einem Reinigungsbetrieb, insbesondere Reinigungskreislauf zur Reinigung der Brühgruppe 2 und/oder des Heizelementes 14 wird diese Reinigungslösung über die Heizspirale 14 der Brühgruppe 2 zugeführt und von dort zurück zur Pumpe 13 geleitet. Dabei wird die Reinigungslösung in den Leitungen 7f, 7g, 7h geführt. Je nach Vorgabe durch den Mikroprozessor zirkuliert die Reinigungslösung für einen vorgegebenen Zeitraum im Reinigungskreislauf, bis schließlich die Reinigungslösung aus dem Reinigungskreislauf ausgeleitet und dann wieder frisches Wasser aus dem Wassertank 10 der Brühgruppe 2 zugeführt wird.

In einem Reinigungsbetrieb ist in mindestens einem, durch das mindestens eine Heizelement 4 des mindestens einen Dampfanschlusses 9 und/oder des mindestens einen Heißwasseranschlusses 8 führbaren und/oder geführten Kreislauf als Fluid Reinigungsmittel zirkulierend angeordnet.

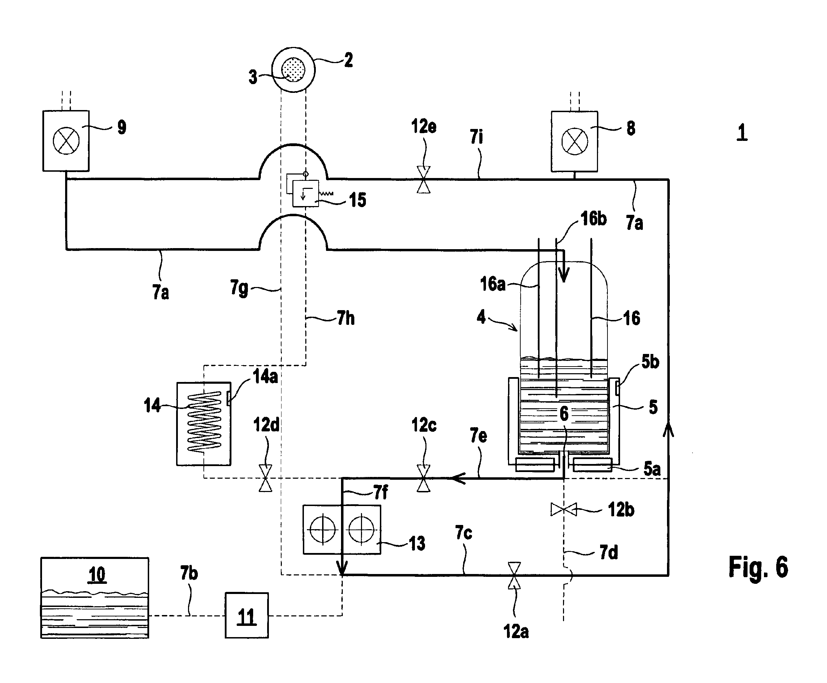

In dem Reinigungsbetrieb, insbesondere Reinigungskreislauf zur Reinigung des Heizkessels 4 (beispielsweise Fig. 6) wird in einem ersten Schritt der Heizkessel 4 entleert, indem dessen Ablauf 6 geöffnet wird und das darin enthaltene Wasser durch eine geeignete Steuerung der Ventile 12a-h abgeleitet wird. Danach erfolgt durch einen beispielsweise reversierenden Betrieb der Pumpe 13 ein Ansaugen von Wasser mit der Reinigungslösung und ein Einspeisen dieser Reinigungslösung in den entlang der Leitungen 7a, 7c führenden Kreislauf zur Reinigung. Dabei werden die in diesem Kreislauf zur Reinigung angeordneten Komponenten, insbesondere der Heizkessel 4 sowie der Heißwasseranschluss 8 und/oder Dampfanschluss 9, gespült und gereinigt.

Durch das dabei bewirkte Umwälzen von Wasser beim Spülvorgang wird eine erhöhte Reinigungsleistung, insbesondere beim Entkalken erzielt.

Die mindestens eine Pumpe 13 ist wahlweise in dem mindestens einen ersten, durch die mindestens eine Brüheinrichtung 2 geführten Kreislauf oder in dem mindestens einen zweiten, durch das mindestens eine weitere Heizelement 4 führbaren und/oder geführten Kreislauf angeordnet.

Alternativ sind mindestens eine erste Pumpe in dem mindestens einen ersten, durch die mindestens eine Brüheinrichtung 2 geführten Kreislauf und eine zweite Pumpe in dem mindestens einen zweiten, durch das mindestens eine weitere Heizelement führbaren und/oder geführten Kreislauf angeordnet.

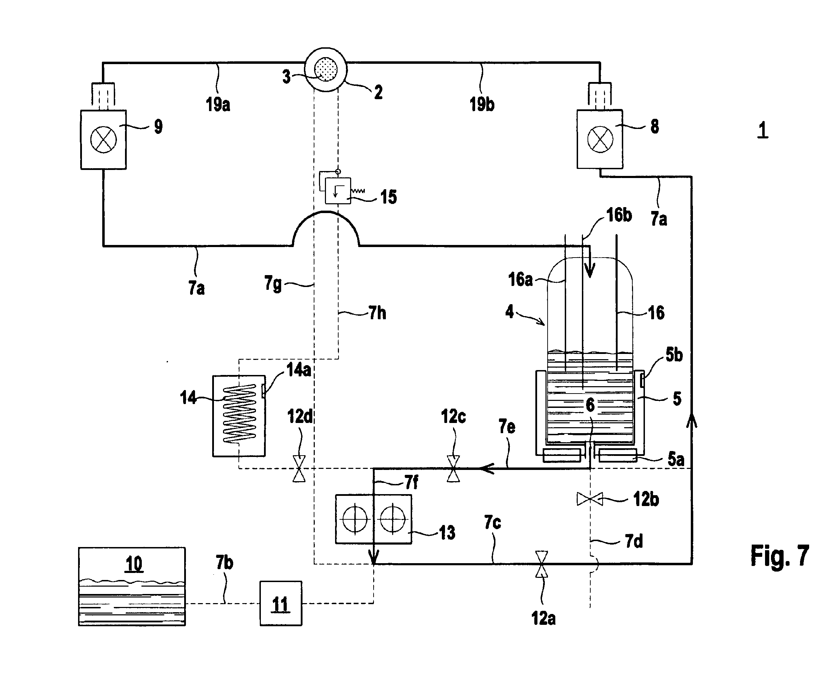

Eine weitere Ausführungsform (beispielsweise Figur 7) unterscheidet sich von den beschriebenen Ausführungsformen nur dadurch, dass die den Heißwasseranschluss 8 und Dampfanschluss 9 verbindende Leitung 7i mit dem Ventil 12e fehlt. Anstelle dieses Ventils 12e sind zwei externe Leitungen 19a, 19b vorgesehen, die beispielsweise Zubehörteile für die Siebträger-Kaffeemaschine 1 bilden. Diese können zur Durchführung eines Reinigungsprozesses nachträglich am Heißwasseranschluss 8, am Dampfanschluss 9 und an der Brüheinrichtung 2 (insbesondere an deren jeweiligen Auslass) angebracht werden.

Bei einem dieser Ausführungsform zugeordneten Reinigungskreislauf wird dann Reinigungmittel auch direkt an den Heißwasseranschluss 8 und den Dampfanschluss 9 geführt, so dass damit auch diese Einheiten zumindest teilweise gereinigt werden.

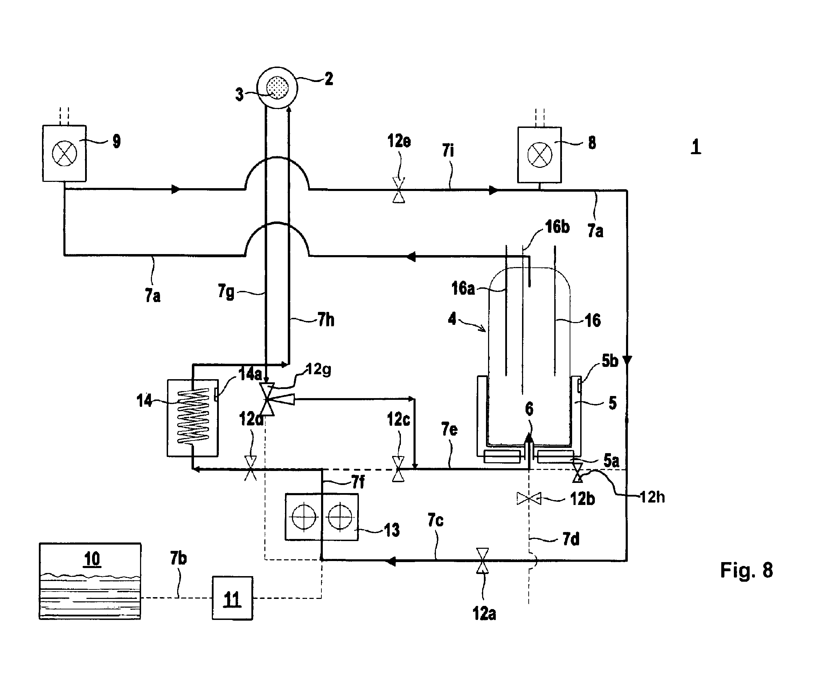

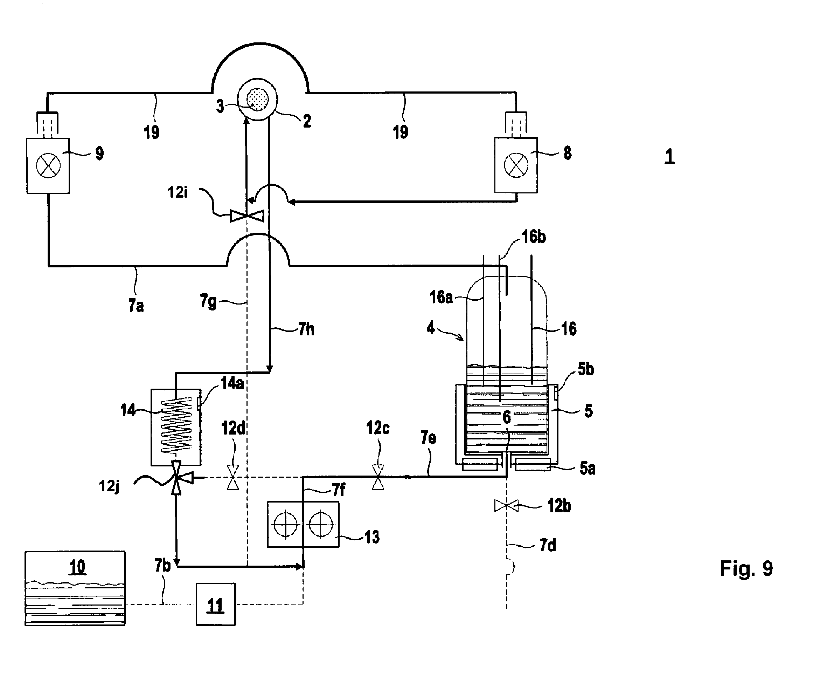

In einem weiteren Ausführungsbeispiel (beispielsweise Fig. 8 oder Fig. 9) ist der eine durch die Brüheinrichtung 2 geführte Kreislauf und der eine durch den Heizkessel 4 geführte Kreislauf als ein gemeinsamer Kreislauf ausgeführt.

Dieser gemeinsame Kreislauf ist mindestens durch die mindestens eine Brüheinrichtung 2 und mindestens durch den mindestens einen Heizkessel 4 geführt und/oder dem mindestens einen Dampfanschluss 9 und/oder dem mindestens einen Heißwasseranschluss 8 zugeordnet. In einer Betriebsart zur Aufheizung ist in dem gemeinsamen Kreislauf mittels des mindestens einen Heizelementes 14 und/oder mittels des Heizkessels 4 aufgeheiztes Wasser vorzugsweise durch die mindestens eine Pumpe 13 zirkulierend angeordnet. In einem Reinigungsbetrieb ist in dem gemeinsamen Kreislauf Reinigungsmittel vorzugsweise durch die mindestens eine Pumpe 13 zirkulierend angeordnet.

In einem Beispiel (beispielsweise Fig. 8) wird der Kreislauf durch ein Leitungssystem gebildet, wobei beispielsweise eine Leitung die Pumpe 13 mit dem Heizelement 14 (vorzugsweise Heizspirale 14), eine Leitung 7h das Heizelement mit der Brüheinrichtung 2, eine Leitung die Brüheinrichtung 2 insbesondere unter Zwischenschaltung eines Ventils 12g (vorzugsweise 3/2 Wegeventil) mit dem Heizkessel 4, eine Leitung 7a, 7i, 7c den Heizkessel 4 mit dem mindestens einen Dampfanschlusses 09 und/oder dem mindestens einen Heißwasseranschlusses 08 mit der Pumpe 13 verbunden und/oder verbindbar angeordnet sind.

Dabei sind die mindestens eine Leitung zur Abführung eines Fluides und die mindestens eine Leitung zur Zuführung eines Fluides nahe, insbesondere unmittelbar und/oder direkt bei dem mindestens einen Dampfanschluss 9 und/oder dem mindestens einen Heißwasseranschluss 8 verbunden.

Alternativ kann die mindestens eine Leitung zur Abführung eines Fluides direkt mit dem mindestens einen Dampfanschluss 9 und/oder dem mindestens einen Heißwasseranschluss 8 verbunden sein.

Mit diesem Kreislauf erfolgt in einer Betriebsart eine Reinigung oder in einer anderen Betriebsart eine Aufheizung der Brüheinrichtung 2, des Heizelementes 14 und des mindestens einen Heizkessels 4 und/oder des mindestens einen Dampfanschlusses 9 und/oder des mindestens einen Heißwasseranschlusses 8.

In einem weiteren Beispiel ist eine externe Leitung 19 (beispielsweise als Zubehör) mit dem Dampfanschluss 9 (insbesondere mit dessen Auslass) und dem Heißwasseranschluss 8 (insbesondere mit dessen Auslass) verbunden (beispielsweise Fig. 9). Dabei wird ein Kreislauf durch ein Leitungssystem gebildet, wobei beispielsweise eine Leitung 7e die Pumpe 13 mit dem Heizkessel 4, eine Leitung 7a den Heizkessel 4 mit dem mindestens einen Dampfanschlusses 9, eine Leitung 19 den mindestens einen Dampfanschlusses 9 mit dem mindestens einen Heißwasseranschlusses 8, eine Leitung den mindestens einen Heißwasseranschlusses 8 mit der Brüheinrichtung 2, eine Leitung 7h die Brüheinrichtung 2 mit dem Heizelement 14 und eine Leitung beispielsweise unter Zwischenschaltung eines Ventils 12j (beispielsweise 3/2 Wegeventil) das Heizelement 14 mit der Pumpe 13 verbunden und/oder verbindbar angeordnet sind.

In diesem Ausführungsbeispiel ist der Heißwasseranschluss 8 während des Brühvorgangs und/oder der Entnahme von Heißwasser (ca. 90°C bis 100°C) mit dem der Brüheinrichtung 2 zugeordneten Heizelement 14 verbunden.

Mit diesem Kreislauf erfolgt in einer Betriebsart eine Reinigung der Brüheinrichtung 2, des mindestens einen Heizelementes 14 und des mindestens einen Heizkessels 4 und des mindestens einen Dampfanschlusses 9 und/oder des mindestens einen Heißwasseranschlusses 8.

### Bezugszeichenliste

- 1: Kaffeemaschine
- 2: Brüheinrichtung, Brühgruppe
- 2a: Grundkörper (2)
- 3: Siebträger
- 4: Heizelement, Heizkessel
- 5a: Heizelement
- 5b: Temperatursensor
- 5: Mantel
- 6: Ablauf (4)
- 7a: Leitung
- 7b: Leitung
- 7c: Leitung
- 7d: Leitung
- 7e: Leitung
- 7f: Leitung
- 7g: Leitung
- 7h: Leitung
- 7i: Leitung
- 8: Heißwasseranschluss
- 9: Dampfanschluss
- 10: Wassertank
- 11: Pumpe
- 12a: Ventil
- 12b: Ventil
- 12c: Ventil
- 12d: Ventil
- 12e: Ventil
- 12f: Ventil
- 12g: Ventil
- 12h: Ventil
- 12i: Ventil
- 12j: Ventil
- 13: Pumpe
- 14: Heizelement, Heizspirale
- 14a: Temperatursensor
- 15: Drucksteuerventil
- 16: Temperatursensor
- 16a: Sensorelement
- 16b: Sensorelement
- 17: Heizpatrone
- 18: Tieflochbohrung
- 19: Leitung
- 19a: Leitung
- 19b: Leitung
- 20: Auslass (2)

## Patentansprüche

1. Kaffeemaschine (1) mit mindestens einer Brüheinrichtung (2), wobei die Kaffeemaschine (1) zusätzlich zu der mindestens einen Brüheinrichtung (2) mindestens einen Dampfanschluss (9) und/oder mindestens einen Heißwasseranschluss (8) aufweist, wobei der mindestens eine Dampfanschluss (9) und/oder der mindestens eine Heißwasseranschluss (8) mittels mindestens einer Leitung zur Zuführung eines Fluides mit mindestens einem Heizelement (4) verbunden ist, wobei die mindestens eine Brüheinrichtung (2) mittels mindestens einer Leitung zur Zuführung eines Fluides mit mindestens einem weiteren Heizelement (14) verbunden ist, **dadurch gekennzeichnet, dass** mindestens ein Kreislauf durch die mindestens eine Brüheinrichtung (2) geführt ist und dass in dem mindestens einen, durch die mindestens eine Brüheinrichtung (2) geführten Kreislauf mindestens eine Pumpe (13) angeordnet ist.

2. Kaffeemaschine (1) nach Anspruch 1, **dadurch gekennzeichnet, dass** mindestens ein Kreislauf durch das mindestens eine Heizelement (4) führbar und/oder geführt ist.

3. Kaffeemaschine (1) nach Anspruch 2, **dadurch gekennzeichnet, dass** in dem mindestens einen, durch das mindestens eine Heizelement (4) führbaren und/oder geführten Kreislauf mindestens eine Pumpe angeordnet ist.

4. Kaffeemaschine (1) nach Anspruch 1, **dadurch gekennzeichnet, dass** die mindestens eine Brüheinrichtung (2) mit mindestens einer Leitung zur Abführung des Fluides verbunden ist, dass die mindestens eine mit der mindestens einen Brüheinrichtung (2) verbundene Leitung zur Zuführung des Fluides und die mindestens eine mit der mindestens einen Brüheinrichtung (2) verbundene Leitung zur Abführung des Fluides mit der mindestens einen Pumpe (13) und mit dem mindestens einen weiteren Heizelement (14) zumindest teilweise den mindestens einen, durch die mindestens eine Brüheinrichtung (2) geführten Kreislauf bildend verbunden sind.

5. Kaffeemaschine (1) nach Anspruch 1 und/oder 2 und/oder 3, **dadurch gekennzeichnet, dass** der mindestens eine Dampfanschluss (9) und/oder der mindestens eine Heißwasseranschluss (8) und/oder die mindestens eine mit dem mindestens einen Dampfanschluss (9) und/oder dem mindestens einen Heißwasseranschluss (8) verbundene Leitung zur Zuführung eines Fluides mit mindestens einer Leitung zur Abführung eines Fluides von dem mindestens einen Dampfanschluss (9) und/oder von dem mindestens einen Heißwasseranschluss (8) verbunden und/oder verbindbar ist.

6. Kaffeemaschine (1) nach Anspruch 2 und/oder 3 und/oder 5, **dadurch gekennzeichnet, dass** der mindestens eine Dampfanschluss (9) und/oder der mindestens eine Heißwasseranschluss (8) und/oder die mindestens eine mit dem mindestens einen Dampfanschluss (9) und/oder dem mindestens einen Heißwasseranschluss (8) verbundene Leitung zur Zuführung eines Fluides und die mindestens eine mit dem mindestens einen Dampfanschluss (9) und/oder dem mindestens einen Heißwasseranschluss (8) und/oder die mindestens eine mit dem mindestens einen Dampfanschluss (9) und/oder dem mindestens einen Heißwasseranschluss (8) verbundene Leitung zur Abführung eines Fluides mit der mindestens einen Pumpe (13) zumindest teilweise den mindestens einen, durch das mindestens eine Heizelement (4) führbaren und/oder geführten Kreislauf bildend verbunden und/oder verbindbar sind.

7. Kaffeemaschine (1) nach Anspruch 2 und/oder 3 und/oder 4 und/oder 6, **dadurch gekennzeichnet, dass** mindestens ein erster Kreislauf durch die mindestens eine Brüheinrichtung (2) geführt ist und dass mindestens ein zweiter Kreislauf durch das mindestens eine Heizelement (4) führbar und/oder geführt ist.

8. Kaffeemaschine (1) nach Anspruch 2 und/oder 3 und/oder 4 und/oder 6, **dadurch gekennzeichnet, dass** mindestens ein gemeinsamer Kreislauf durch die mindestens eine Brüheinrichtung (2) geführt und durch das mindestens eine Heizelement (4) führbar und/oder geführt ist.

9. Kaffeemaschine (1) nach Anspruch 2 und/oder 3 und/oder 6 und/oder 7, **dadurch gekennzeichnet, dass** die mindestens eine Pumpe (13) wahlweise in dem mindestens einen ersten, durch die mindestens eine Brüheinrichtung (2) geführten Kreislauf oder in dem mindestens einen zweiten, durch das mindestens eine Heizelement (4) führbaren und/oder geführten Kreislauf angeordnet ist.

10. Kaffeemaschine (1) nach Anspruch 2 und/oder 3 und/oder 6 und/oder 7, **dadurch gekennzeichnet, dass** mindestens eine erste Pumpe (13) in dem mindestens einem ersten, durch die mindestens eine Brüheinrichtung (2) geführten Kreislauf und eine zweite Pumpe in dem mindestens einen zweiten, durch das mindestens eine Heizelement (4) führbaren und/oder geführten Kreislauf angeordnet sind.

11. Kaffeemaschine (1) nach Anspruch 1 und/oder 2 und/oder 4 und/oder 6 und/oder 7 und/oder 8 und/oder 9 und/oder 10, **dadurch gekennzeichnet, dass** in einem Betriebszustand in dem mindestens einen ersten, durch die mindestens eine Brüheinrichtung (2) geführten Kreislauf als Fluid Heißwasser zirkulierend angeordnet ist und dass gleichzeitig in der mit dem mindestens einen Dampfanschluss (9) verbundenen Leitung zur Zuführung eines Fluides als Fluid Dampf angeordnet ist und/oder dass der mindestens eine, durch das mindestens eine Heizelement (4) führbare und/oder geführte Kreislauf unterbrochen ist.

12. Kaffeemaschine (1) nach Anspruch 1 und/oder 2 und/oder 7 und/oder 8 und/oder 9 und/oder 10 und/oder 11, **dadurch gekennzeichnet, dass** in einem Reinigungsbetrieb in dem mindestens einen, durch die mindestens eine Brüheinrichtung (2) geführten Kreislauf und/oder in dem mindestens zweiten, durch das mindestens eine Heizelement (4) führbaren und/oder geführten Kreislauf als Fluid Reinigungsmittel zirkulierend angeordnet ist oder dass in einem Reinigungsbetrieb in dem mindestens einen gemeinsamen, durch die mindestens eine Brüheinrichtung (2) geführten und durch das mindestens eine Heizelement (4) führbaren und/oder geführten Kreislauf als Fluid Reinigungsmittel zirkulierend angeordnet ist.

13. Kaffeemaschine (01) nach Anspruch 1 und/oder 2 und/oder 3 und/oder 6 und/oder 7 und/oder 8 und/oder 9 und/oder 10 und/oder 12, **dadurch gekennzeichnet, dass** das mindestens eine Heizelement (4) als mindestens ein Heizkessel (4) ausgebildet ist und dass dieser Heizkessel (4) mindestens einen mittels mindestens eines Ventils (12b) betätigbaren Ablauf (6) aufweist.

14. Kaffeemaschine (1) nach Anspruch 1 und/oder 11 und/oder 12, **dadurch gekennzeichnet, dass** eine Rechnersteuerung zumindest mindestens ein Ventil bei einer Umschaltung von einem Betriebszustand in einen Reinigungszustand steuernd angeordnet ist.

15. Verfahren zum Betrieb einer Kaffeemaschine (1) mit mindestens einer Brüheinrichtung (2), wobei die Kaffeemaschine (1) zusätzlich zu der mindestens einen Brüheinrichtung (2) mindestens einen Dampfanschluss (9) und/oder mindestens einen Heißwasseranschluss (8) aufweist, wobei der mindestens eine Dampfanschluss (9) und/oder der mindestens eine Heißwasseranschluss (8) mittels mindestens einer Leitung zur Zuführung eines Fluides mit mindestens einem Heizelement (4) verbunden ist, wobei die mindestens eine Brüheinrichtung (2) mittels mindestens einer Leitung zur Zuführung eines Fluides mit mindestens einem weiteren Heizelement (14) verbunden ist, wobei mindestens ein Kreislauf durch die mindestens eine Brüheinrichtung (2) geführt ist, wobei in dem mindestens einen, durch die mindestens eine Brüheinrichtung (2) geführten Kreislauf mindestens eine Pumpe (13) angeordnet ist, wobei in einem Betriebszustand in dem mindestens einen, durch die mindestens eine Brüheinrichtung (2) geführten Kreislauf als Fluid Heißwasser zirkuliert, wobei in einem Reinigungsbetrieb in dem mindestens einen, durch die mindestens eine Brüheinrichtung (2) geführten Kreislauf und/oder in mindestens einem, durch das mindestens eine Heizelement (4) geführten Kreislauf als Fluid Reinigungsmittel zirkuliert.

## Claims

1. Coffee machine (1) containing at least one brewing device (2), the coffee machine (1) having at least one steam connection (9) and/or at least one hot water connection (8) additionally to the at least one brewing device (2), the at least one steam connection (9) and/or the at least one hot water connection (8) being connected to at least one heating element (4) by means at least of one line for the supply of a fluid, the at least one brewing device (2) being connected to at least one further heating element (14) by means at least of one line for the supply of a fluid, **characterized in that** at least one circulation is conducted through the at least one brewing device (2) and **in that** at least one pump (13) is arranged in the at least one circulation conducted through the at least one brewing device (2).

2. Coffee machine (1) according to Claim 1, **characterized in that** at least one circulation can be conducted and/or is conducted through the at least one heating element (4).

3. Coffee machine (1) according to Claim 2, **characterized in that** at least one pump is arranged in the at least one circulation that can be conducted and/or is conducted through the at least one heating element (4).

4. Coffee machine (1) according to Claim 1, **characterized in that** the at least one brewing device (2) is connected to at least one line for drawing off the fluid, **in that** the at least one line for the supply of the fluid connected to the at least one brewing device (2) and the at least one line for drawing off the fluid connected to the at least one brewing device (2) are connected to the at least one pump (13) and to the at least one further heating element (14) at least partially forming the at least one circulation conducted through the at least one brewing device (2).

5. Coffee machine (1) according to Claim 1 and/or 2 and/or 3, **characterized in that** the at least one steam connection (9) and/or the at least one hot water connection (8) and/or the at least one line for the supply of a fluid connected to the at least one steam connection (9) and/or to the at least one hot water connection (8) is connected and/or can be connected to at least one line for drawing off a fluid from the at least one steam connection (9) and/or from the at least one hot water connection (8).

6. Coffee machine (1) according to Claim 2 and/or 3 and/or 5, **characterized in that** the at least one steam connection (9) and/or the at least one hot water connection (8) and/or the at least one line for the supply of a fluid connected to the at least one steam connection (9) and/or to the at least one hot water connection (8) and the at least one line for drawing off a fluid connected to the at least one steam connection (9) and/or to the at least one hot water connection (8) and/or the at least one line connected to the at least one steam connection (9) and/or to the at least one hot water connection (8) are connected and/or can be connected to the at least one pump (13) at least partially forming the at least one circulation that can be conducted and/or is conducted through the at least one heating element (4).

7. Coffee machine (1) according to Claim 2 and/or 3 and/or 4 and/or 6, **characterized in that** at least one first circulation is conducted through the at least one brewing device (2) and **in that** at least one second circulation can be conducted and/or is conducted through the at least one heating element (4).

8. Coffee machine (1) according to Claim 2 and/or 3 and/or 4 and/or 6, **characterized in that** at least one common circulation is conducted through the at least one brewing device (2) and can be conducted and/or is conducted through the at least one heating element (4).

9. Coffee machine (1) according to Claim 2 and/or 3 and/or 6 and/or 7, **characterized in that** the at least one pump (13) is optionally arranged in the at least one first circulation conducted through the at least one brewing device (2) or in the at least one second circulation that can be conducted and/or is conducted through the at least one heating element (4).

10. Coffee machine (1) according to Claim 2 and/or 3 and/or 6 and/or 7, **characterized in that** at least one first pump (13) is arranged in the at least one first circulation conducted through the at least one brewing device (2) and a second pump is arranged in the at least one second circulation that can be conducted and/or is conducted through the at least one heating element (4).

11. Coffee machine (1) according to Claim 1 and/or 2 and/or 4 and/or 6 and/or 7 and/or 8 and/or 9 and/or 10, **characterized in that** in one operating state hot water is arranged circulating in the at least one first circulation conducted through the at least one brewing device (2) and **in that** simultaneously steam is arranged as the fluid in the line for the supply of a fluid connected to the at least one steam connection (9) and/or **in that** the at least one circulation that can be conducted and/or is conducted through the at least one heating element (4) is interrupted.

12. Coffee machine (1) according to Claim 1 and/or 2 and/or 7 and/or 8 and/or 9 and/or 10 and/or 11, **characterized in that** a cleaning agent circulating as a fluid is arranged in a cleaning operation in the at least one circulation conducted through the at least one brewing device (2) and/or in the at least second circulation that can be conducted and/or is conducted through the at least one heating element (4) or **in that** cleaning agent circulating as a fluid is arranged in a cleaning operation in the at least one common circulation conducted through the at least one brewing device (2) and that can be conducted and/or is conducted through the at least one heating device (4).

13. Coffee machine (01) [sic] according to Claim 1 and/or 2 and/or 3 and/or 6 and/or 7 and/or 8 and/or 9 and/or 10 and/or 12, **characterized in that** the at least one heating element (4) is designed as at least one heating vessel (4) and **in that** this heating vessel (4) contains at least one outlet (6) actuatable by means at least of one valve (12b).

14. Coffee machine (1) according to Claim 1 and/or 11 and/or 12, **characterized in that** one computer control at least is arranged controlling at least one valve in a switching from an operating state to a cleaning state.

15. Method for the operation of a coffee machine (1) having at least one brewing device (2), the coffee machine (1), additionally to the at least one brewing device (2), having at least one steam connection (9) and/or at least one hot water connection (8), the at least one steam connection (9) and/or the at least one hot water connection (8) being connected by means at least of one line for the supply of a fluid to at least one heating element (4), the at least one brewing device (2) being connected by means at least of one line for the supply of a fluid to at least one further heating element (14), at least one circulation being conducted through the at least one brewing device (2), at least one pump (13) being arranged in the at least one circulation conducted through the at least one brewing device (2), in one operating state hot water circulating as a fluid in the at least one circulation conducted through the at least one brewing device (2), in a cleaning operation cleaning agent circulating as a fluid in the at least one circulation conducted through the at least one brewing device (2) and/or in at least one circulation conducted through the at least one heating element (4).

## Revendications

1. Machine à café (1) avec au moins un dispositif infuseur (2), ladite machine à café (1) comportant au moins un raccord de vapeur (9) et/ou au moins un raccord d'eau chaude (8) en plus du ou des dispositifs infuseurs (2), le ou les raccords de vapeur (9) et/ou le ou les raccords d'eau chaude (8) étant reliés à au moins un élément chauffant (4) par au moins une conduite d'amenée d'un fluide, le ou les dispositifs infuseurs (2) étant reliés à au moins un autre élément chauffant (14) par au moins une conduite d'amenée d'un fluide, **caractérisée en ce qu'**au moins un circuit passe par le ou les dispositifs infuseurs (2) et **en ce qu'**au moins une pompe (13) est disposée dans le ou les circuits passant par le ou les dispositifs infuseurs (2).

2. Machine à café (1) selon la revendication 1, **caractérisée en ce qu'**au moins un circuit peut passer et/ou passe par le ou les éléments chauffants (4).

3. Machine à café (1) selon la revendication 2, **caractérisée en ce qu'**au moins une pompe est disposée dans le ou les circuits pouvant passer et/ou passant par le ou les éléments chauffants (4).

4. Machine à café (1) selon la revendication 1, **caractérisée en ce que** le ou les dispositifs infuseurs (2) sont reliés à au moins une conduite d'évacuation du fluide, **en ce que** la ou les conduites d'amenée du fluide reliées au dispositif ou aux dispositifs infuseurs (2) et la ou les conduites d'évacuation du fluide reliées au dispositif ou aux dispositifs infuseurs (2) sont reliées à la pompe ou aux pompes (13) et à l'autre élément ou aux autres éléments chauffants (14), en formant au moins partiellement le ou les circuits passant par le ou les dispositifs infuseurs (2).

5. Machine à café (1) selon la revendication 1 et/ou la revendication 2 et/ou la revendication 3, **caractérisée en ce que** le ou les raccords de vapeur (9) et/ou le ou les raccords d'eau chaude (8) et/ou la ou les conduites d'amenée d'un fluide reliées au raccord ou aux raccords de vapeur (9) et/ou au raccord ou aux raccords d'eau chaude (8) sont reliés et/ou peuvent être reliés à au moins une conduite d'évacuation d'un fluide depuis le ou les raccords de vapeur (9) et/ou depuis le ou les raccords d'eau chaude (8).

6. Machine à café (1) selon la revendication 2 et/ou la revendication 3 et/ou la revendication 5, **caractérisée en ce que** le ou les raccords de vapeur (9) et/ou le ou les raccords d'eau chaude (8) et/ou la ou les conduites d'amenée d'un fluide reliées au raccord ou aux raccords de vapeur (9) et/ou au raccord ou aux raccords d'eau chaude (8) et la ou les conduites d'évacuation d'un fluide reliées au raccord ou aux raccords de vapeur (9) et/ou au raccord ou aux raccords d'eau chaude (8) sont reliés et/ou peuvent être reliés à la pompe ou aux pompes (13), en formant au moins partiellement le ou les circuits passant par le ou les éléments chauffants (4).

7. Machine à café (1) selon la revendication 2 et/ou la revendication 3 et/ou la revendication 4 et/ou la revendication 6, **caractérisée en ce qu'**au moins un premier circuit passe par le ou les dispositifs infuseurs (2) et **en ce qu'**au moins un deuxième circuit peut passer et/ou passe par le ou les éléments chauffants (4).

8. Machine à café (1) selon la revendication 2 et/ou la revendication 3 et/ou la revendication 4 et/ou la revendication 6, **caractérisée en ce qu'**au moins un circuit commun passe par le ou les dispositifs infuseurs (2) et peut passer et/ou passe par le ou les éléments chauffants (4).

9. Machine à café (1) selon la revendication 2 et/ou la revendication 3 et/ou la revendication 6 et/ou la revendication 7, **caractérisée en ce que** la ou les pompes (13) sont sélectivement disposées dans le ou les premiers circuits passant par le ou les dispositifs infuseurs (2), ou dans le ou les deuxièmes circuits pouvant passer et/ou passant par le ou les éléments chauffants (4).

10. Machine à café (1) selon la revendication 2 et/ou la revendication 3 et/ou la revendication 6 et/ou la revendication 7, **caractérisée en ce qu'**au moins une première pompe (13) est disposée dans le ou les premiers circuits passant par le ou les dispositifs infuseurs (2) et une deuxième pompe dans le ou les deuxièmes circuits pouvant passer et/ou passant par le ou les éléments chauffants (4).

11. Machine à café (1) selon la revendication 1 et/ou la revendication 2 et/ou la revendication 4 et/ou la revendication 6 et/ou la revendication 7 et/ou la revendication 8 et/ou la revendication 9 et/ou la revendication 10, **caractérisée en ce que**, dans un état de fonctionnement, de l'eau chaude circule en tant que fluide dans le ou les premiers circuits passant par le ou les dispositifs infuseurs (2), et **en ce que** de la vapeur est simultanément présente en tant que fluide dans la conduite d'amenée d'un fluide reliée au raccord ou aux raccords de vapeur (9), et/ou **en ce que** le ou les circuits pouvant passer et/ou passant par le ou les éléments chauffants (4) est interrompu.

12. Machine à café (1) selon la revendication 1 et/ou la revendication 2 et/ou la revendication 7 et/ou la revendication 8 et/ou la revendication 9 et/ou la revendication 10 et/ou la revendication 11, **caractérisée en ce que**, dans un mode de nettoyage, un agent détergent circule en tant que fluide dans le ou les circuits passant par le ou les dispositifs infuseurs (2) et/ou le ou les deuxièmes circuits pouvant passer et/ou passant par le ou les éléments chauffants (4), ou **en ce que**, dans un mode de nettoyage, un agent détergent circule en tant que fluide dans le ou les circuits communs passant par le ou les dispositifs infuseurs (2) et dans le ou les circuits pouvant passer et/ou passant par le ou les éléments chauffants (4).

13. Machine à café (01) selon la revendication 1 et/ou la revendication 2 et/ou la revendication 3 et/ou la revendication 6 et/ou la revendication 7 et/ou la revendication 8 et/ou la revendication 9 et/ou la revendication 10 et/ou la revendication 12, **caractérisée en ce que** le ou les éléments chauffants (4) sont réalisés sous la forme d'au moins une bouilloire (4), et **en ce que** ladite bouilloire (4) comporte au moins une évacuation (6) pouvant être commandée par au moins une vanne (12b).

14. Machine à café (1) selon la revendication 1 et/ou la revendication 11 et/ou la revendication 12, **caractérisée en ce qu'**une commande d'ordinateur est prévue au moins pour commander au moins une vanne lors d'une commutation d'un état de fonctionnement à un état de nettoyage.

15. Procédé de fonctionnement d'une machine à café (1) avec au moins un dispositif infuseur (2), ladite machine à café (1) comportant au moins un raccord de vapeur (9) et/ou au moins un raccord d'eau chaude (8) en plus du ou des dispositifs infuseurs (2), le ou les raccords de vapeur (9) et/ou le ou les raccords d'eau chaude (8) étant reliés à au moins un élément chauffant (4) par au moins une conduite d'amenée d'un fluide, le ou les dispositifs infuseurs (2) étant reliés à au moins un autre élément chauffant (14) par au moins une conduite d'amenée d'un fluide, au moins un circuit passant par le ou les dispositifs infuseurs (2), au moins une pompe (13) étant disposée dans le ou les circuits passant par le ou les dispositifs infuseurs (2), où, dans un état de fonctionnement, de l'eau chaude circule en tant que fluide dans le ou les circuits passant par le ou les dispositifs infuseurs (2), et où, dans un mode de nettoyage, un agent détergent circule en tant que fluide dans le ou les circuits passant par le ou les dispositifs infuseurs (2) et/ou dans le ou les circuits pouvant passant par le ou les éléments chauffants (4).
